# EUROPEAN PATENT APPLICATION

(11) **EP 2 796 301 A1**
(43) Date of publication of application: **29.10.2014**
(21) Application number: 14165322.0
(22) Date of filing: 18.04.2014
(51) Int. Cl.: B60C 17/02, B60C 29/00

(54) **Pneumatic wheel assembly**

(30) Priority: 24.04.2013 LU 92187
(71) Applicant: Galuszka, Andrzej Jaroslaw, 5573 Remich (LU)
(72) Inventor: Galuszka, Andrzej Jaroslaw, 5573 Remich (LU)
(74) Representative: Office Freylinger

(57) **Abstract**

A pneumatic wheel assembly comprises a tyre (2), mounted to a wheel rim (1), comprising an inflation valve (4), one default air chamber (5) and one or more spare inner chambers (31, 32), which spare inner chambers (31, 32) are inflatable if necessary, such as in case of puncture of the tyre, wherein said inflation valve (4) comprises a gas inlet (411) and a multi-way valve having selectable switching states to fluidly connect said inlet to either one of the default chamber (5) or one of the inflatable inner chambers (31, 32) thereby allowing for individual inflation of any of said chambers (5, 31, 32), and a perforated rigid chamber (33) extending circumferentially around the rim between the tyre beads and fluidly connectable to a gas outlet (441).

## Description

### Technical field

The present invention generally relates to tyres and in particular to pneumatic tyres mounted on a wheel rim and capable of being re-inflated after puncture without requiring even partial removal of the tyre from the rim.

### Background Art

A flat tyre occurs when a (tubeless) tyre deflates. This can occur as a result of normal wear-and-tear or unexpectedly due to a puncture of the tyre. A tyre that has lost all pressure or at least part of its pressure will impair the stability of the vehicle and may damage the tyre further if it is driven in this condition. The tyre should be changed and/or repaired before it becomes completely flat or immediately if the leak is important. Continuing to drive a vehicle with a (partially) flat tire will damage the tyre beyond repair, possibly damage the rim and vehicle, and put the occupants and other vehicles in danger. A flat or low-pressure tyre should be considered an emergency situation, requiring immediate attention.

Numerous solutions have been proposed to either try to prevent such situations or to provide a fast and easy repair in case a tyre becomes flat. For example, it is well known in the art of tyres to provide within a (tubeless) tyre a spare inner tube which may be inflated in case of the tyre having been punctured.

For example documents GB851808 and GB944033 disclose pneumatic tyres, wherein an uninflated safety inner tube is folded in a well-base of the rim. The inner tube may optionally be restrained when uninflated. In case of a puncture, this safety inner tube may be inflated to fill the space within the tyre. The inner safety tube is provided with a separate inflation valve. Document GB2227213 discloses a quite similar configuration with a first inflatable annular member and a second inflatable member within said first member, wherein the inflation valve may be a valve common to both first and second members.

Although the above references provide solutions for re-inflating a punctured tyre without first removing and repairing or even replacing the tyre, it remains that the results are not always those expected. Indeed, when inflating a spare tube inside a punctured and flat tyre, it frequently happens that the apparently correctly re-inflated tyre loses more or less abruptly part of its pressure shortly after re-inflation, generally after driving a few kilometres. This is of course not only inopportune, but it may even be dangerous if it happens during driving, either directly if the loss is important or later because the partial loss remains unnoticed until the tyre is damaged or bursts.

### Technical problem

It is an object of the present invention to provide a solution which not only allows for re-inflating a punctured tyre without having to remove the tyre from the rim and to repair or replace it, but which furthermore efficiently prevents this "partial pressure drop" phenomenon, i.e. the partial loss of the pressure within the tyre shortly after re-inflation and the consequences thereof.

This object is achieved by a pneumatic wheel assembly as claimed in claim 1, as well as by the method as claimed in claim 9.

### General Description of the Invention

Hence, in order to overcome the above-mentioned problem, the present invention proposes in one aspect a pneumatic wheel assembly comprising a tyre, mounted to a wheel rim, comprising an inflation valve or valve stem, one default gas (or air) chamber and one or more spare inner chambers, which spare inner chambers are inflatable if necessary, such as in case of puncture of the tyre. The inflation valve or valve stem comprises a gas inlet and a multi-way valve having selectable switching states to fluidly connect said inlet to either one of the default chamber or one of the inflatable inner chambers, thereby allowing for individual inflation of any of said chambers, and a perforated rigid chamber which extends circumferentially around the rim between the tyre beads and which is fluidly connectable to a gas outlet.

The general advantage of the invention is of course the possibility to re-inflate a punctured flat tyre without having to remove the tyre from the wheel rim or even the wheel from the vehicle. Selecting the appropriate switching position on the inflation valve and connecting the valve to a source of compressed gas is basically all that need to be done to repair the flat tyre. Hence, the carrying of a spare wheel becomes unnecessary.

The main specific benefit of the invention is that it prevents the above described phenomenon when inflating one of the spare chambers by efficiently preventing the formation of air pouches inside the tyre, but outside the inflating chamber. This phenomenon is observed in particular for relatively air-tight wheel assemblies, such as in particular (but not exclusively) in tubeless tyre wheels, depending on the position of the puncture with respect to that of the valve stem and/or to the footprint (or contact patch) of the flat tyre. These air pouches contribute to the overall pressure inside the tyre, but only until they are moved towards the location of the puncture or of any other orifice where the air outside the inflated chamber escapes to the atmosphere. This movement within the tyre naturally occurs after some time when the tyre is moved under load or otherwise shaken or worked. Hence, the perforated rigid chamber acts as an "air drainage" during re-inflation. In tubed tyres (i.e. wherein the default chamber is also formed by a tube), the fluid connection between the perforated chamber and the gas outlet may be permanent, whereas in tubeless tyres said gas outlet may be shut and opened as necessary.

A further advantage of the invention is that the tyre may be inflated more rapidly, as the (now) useless gas outside the inflating chamber is more efficiently drained to the atmosphere, thereby reducing the counter-pressure inside the tyre. This effect is particularly important when using a compressed gas source with relatively low pressure.

The perforated rigid chamber is generally fixed to the rim at least at the location of the aperture in the rim used for the gas outlet. However, the rigid perforated chamber may be fixed at other locations if desired or deemed necessary, such as by clips or glue or any other appropriate means. In some embodiments, the perforated chamber may even form a part of the rim, in which case the rim comprises on its inner side a channel with perforations.

In a preferred embodiment, the perforated rigid chamber is further connected to one or more side branching perforated tube(s), which each extend laterally from (and at one or more locations on) the perforated rigid chamber along at least part of the inner side-wall of the tyre. This embodiment with lateral extensions is particularly adapted for low aspect ratio tyres, sometimes known as "low profile" tyres. Indeed, in such tyres, an inflating chamber almost always creates one or even two lateral air pouches depending on the respective location of the inflatable inner chamber and the perforated rigid chamber inside the tyre during inflation. By laterally extending the "drainage", these lateral pouches may be efficiently prevented as well. The lateral extension(s) are fluidly connected at an angle to the perforated rigid chamber and this angle may be chosen quite freely as long as at least part of the lateral extension is adjacent to the inner side wall of the tyre at a height or distance from the rim. In general the angle is between 135° and 45° with respect to the perforated rigid chamber, i.e. with respect to beads of the tyre. Preferably, the angle is between 120° and 60°, even more preferably between 105° and 75°. In particular the angle is chosen to be essentially at 90° from to the perforated rigid chamber, such as 95° to 85° (i.e. essentially perpendicular) to keep the length of the extension at a minimum while maintaining the air draining reach within the tyre.

Preferably, each or at least some of the side branching perforated tube(s) laterally extend (at one or more locations) at an angle from the perforated rigid chamber along the inner side-wall and part of the inner side of the tread of the tyre. Further to the previous configuration, this one is also particularly adapted to tyres having a rather high aspect ratio wherein the pouches are more likely to form on the tread side (and possibly also on the rim side). Again, the angle may be chosen as already described.

In a further preferred embodiment, the one or more side branching perforated tube(s) extend essentially perpendicularly from the perforated rigid chamber all along the inner wall of the tyre. In such a configuration, a side branching is adjacent to the inner wall on a path comprised in the plane of a cross-section of the tyre. In such configuration the side branching may be connected at both ends to perforated circumferential chamber, thereby forming itself a ring-like configuration.

A still further preferred pneumatic wheel assembly comprises only one side branching perforated tube which is connected to the perforated rigid chamber at a position diametrically opposed to that of the inflation valve (relative to the wheel rim) and is essentially perpendicular to the radial perforated rigid chamber. It has been found that this embodiment is a good compromise between efficient preventing of air pouches and technical complexity for the most common tyre configurations, such as trucks, cars, motorcycles and even bicycles.

The inflation valve generally comprises an first section with the gas inlet, a second section comprising the multi-way valve having selectable switching states and a third section where it fluidly connects to the inner chamber(s).

The first section is basically identical to the upper section of conventional valves and can thus be similar to so-called Schrader valves (also called American valves) with a valve stem into which a poppet valve is threaded with a spring attached. Other types of valves for the first section, such as Presta or Dunlop type, are also possible.

The second section comprises a multi-way valve allowing for the selective fluid connection of the gas inlet to one of the inner chambers. The multi-way valve comprises means to select among different switching states or positions, each of which opens a gas passage to one inner chamber and closes off the passage to the other chamber(s). In some embodiments, the selection of one switching state opening a fluid connection to an inner chamber may concomitantly open or close off a gas passage to a gas outlet, as needed. The multi-way valve part may be of any appropriate type. Preferably, the multi-way valve comprises at least a rotational part having a central gas inlet and a number of peripheral gas vents. The peripheral position of the gas vents on the rotational part are such that, depending on the rotational position of the rotational part, one of these gas vents fluidly connects the gas inlet with one of the chambers of the tyre.

The third section essentially corresponds to the base of the inflation valve passing through an aperture in the rim. This section fits the inflation valve in an air-tight fashion (directly or indirectly) to the rim and is attached to the individual fluid connections to the (default and one or more spare) inner chambers.

In preferred embodiments, the valve stem further comprises a fourth section comprising a gas outlet. In particular embodiments, the gas outlet of the herein-described pneumatic wheel assembly is arranged on the periphery of the inflation valve, preferably in the form of a peripheral recessed duct part around the first part. Hence, the inflation valve of such a wheel assembly, preferably presents a recessed ring-shaped outlet coaxially arranged around an inner inlet conduit, the inlet conduit connecting the gas inlet to the inner chamber(s). In a still further embodiment, the outer diameter of the inflation valve with a peripheral gas outlet is that of conventional valve stems, in which case the inlet conduit of the inflation valve is constricted at least at the level of the gas outlet.

In a further aspect, the invention proposes a method for re-inflating a flat punctured tyre of a pneumatic wheel assembly of a vehicle as described herein, the method comprising the following steps:
(a) optionally or if necessary, lifting the vehicle to get the pneumatic wheel assembly with the punctured tyre from ground (free for manual rotation),
(b) if applicable or necessary, removing the object which caused the puncture of the tyre,
(c) selecting a switching state of the inflation valve corresponding to one of the spare inner chambers, i.e. the switching state which fluidly connects the inlet to the chosen chamber,
(d) connecting the inlet of the inflation valve to a compressed gas source, and
(e) inflating said selected spare inner chamber with compressed gas from the compressed gas supply.

In a still further aspect, the invention proposes the use of a pneumatic wheel assembly as described herein for allowing re-inflation of a punctured flat tyre without removal of the tyre form the rim and without risk of partial deflation phenomenon.

The (compressed) gas usable for re-inflating the wheel assembly may be air, nitrogen, carbon dioxide or any other appropriate gas or mixture of gases.

The spare inflatable chambers are spare annular tubes which are generally located in the region of the wheel rim between the beads of the tyre when uninflated. These tubes are made of light-weight extensible air-tight material, such as rubber, synthetic rubbers or any other appropriate material. Depending on the cross-sectional size of the tyre and the extensibility of the material making up the tubes, the uninflated spare tubes may either be straight (flat) or be circumferentially folded e.g. with pleated sides to accommodate within a minimum space. If they are folded, it may be advantageous to provide them with breakable restraining means to keep them in place until they are inflated. Such restraining means are such that they may confine the tube in its location, but are not strong enough to resist the forces exerted by the inflation of the tube. These restraining means may comprise e.g. a thin membrane, a rupturable web, stripes of "removable" adhesive (such as pressure sensitive glues) or similar.

The number of spare inner chambers is generally selected from 1, 2 or 3. However, depending on the size (width) and the intended use of the tyre, more (such as 4, 5 or even more) spare chambers may be foreseen. In such cases, some of these spare chambers may also be provided with their own (separate) valve stem, if deemed useful.

The perforated rigid chamber serving as an "air drainage" present a hollow cross-section and are rigid in the sense that they offer sufficient dimensional stability to prevent the hollow space inside these perforated chambers from collapsing at the pressures generally used in tyres and in particular at pressures the particular pneumatic wheel assembly is designed for. Yet, the material(s) making up the perforated chamber may be flexible in the sense that the rigid chamber may to a certain extent be bent without breaking. Appropriate materials for the perforated rigid chambers are plastics in general, preferably polyethylene, rubber with internal plastic, textile or metal reinforcement or even metal, such as aluminium, etc. or combinations of different materials. In one embodiment, the perforated rigid chamber may comprise a perforated rubber hose with an internal plastic, textile or metal reinforcement structure, such as a metal spiral or textile plies. The cross-section of the perforated rigid chamber may be round, oval, or even polygonal, rounded shapes are however preferred in order not to damage the inflated inner chamber.

The perforations of these rigid chambers are intended to allow the gas inside the tyre, but outside the spare inner chamber which is going to be inflated, to pass through the hollow space to the gas outlet and thus to the exterior of the wheel assembly. As a consequence, the perforations must be large enough for the gas to pass and small enough not to impede the dimensional stability of the chamber. In general, the size of the perforations is between 0,1 and 2 mm, although sizes below or above this range may also be appropriate. The number and distribution of the perforations to achieve an efficient drainage may be easily determined by a person skilled in the art.

The optional lateral perforated extensions may be made of the same material as the perforated rigid chamber, however plastic materials are preferred. These lateral extensions may be integrally made with the rigid chamber or they may represent separate parts attached to the rigid chamber in any appropriate manner, such as by welding, gluing, press-fitting, etc.

### Brief Description of the Drawings

A preferred embodiment of the invention will now be described, by way of example, with reference to the accompanying drawings in which:
Fig. 1 is a cross-sectional view of an embodiment of a pneumatic wheel assembly according to the invention,
Fig. 2 is a view of a detail of Fig. 1, showing a cross-section of an embodiment of an inflation valve,
Fig. 3 is a cross-sectional top view of the embodiment of an inflation valve of Fig. 2 (selection of tubeless chamber), and
Fig. 4 shows the cross-sectional top view of Fig. 3, wherein the valve stem has been twisted by 45° for selection of an alternative position (selection of internal tube 1).

Further details and advantages of the present invention will be apparent from the following detailed description of several not limiting embodiments with reference to the attached drawings.

### Description of Preferred Embodiments

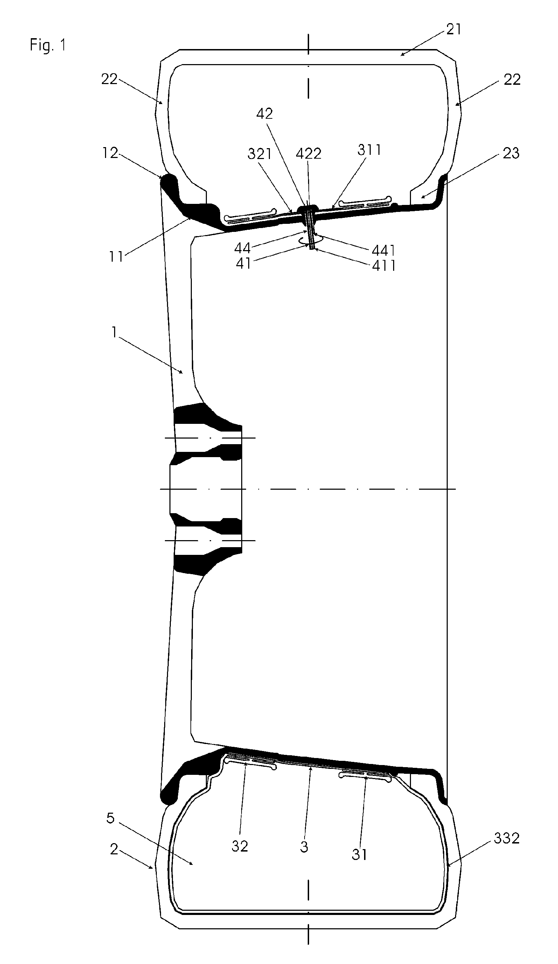

In Fig. 1, an embodiment of a pneumatic wheel assembly is show in a cross-sectional view. A tyre 2 forms a tyre casing comprising a tread portion 21, side-walls 22 and beaded edges 23. The tyre 2 is mounted on a wheel rim 1 having tyre bead seats 11 and retaining flanges 12 to receive the beaded edges 23 of the tyre 2. In the example shown the tyre 2 is a tubeless type tyre, wherein the tyre and the rim of the wheel form an airtight seal. The pneumatic wheel assembly further comprises an inflation valve (also generally called valve stem herein) 4 being generally directly mounted through an aperture in the rim.

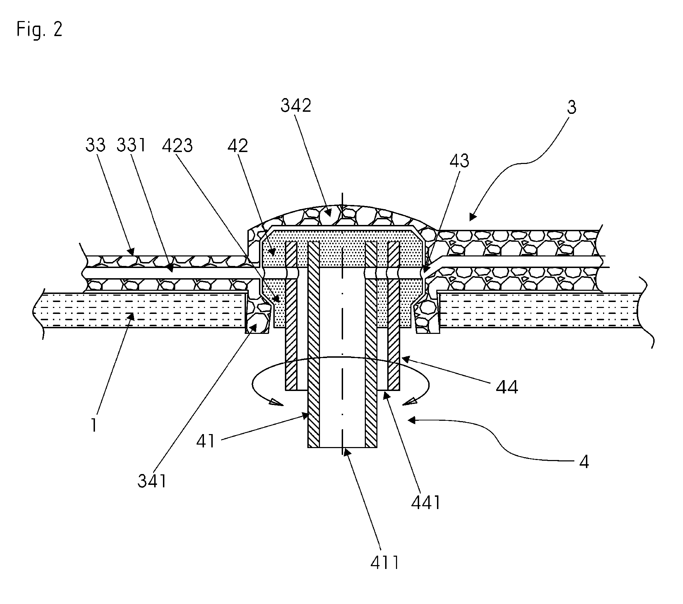

In the depicted embodiment of Fig. 1 and Fig. 2, the valve stem 4 comprises an first section 41 with a gas inlet 411, a second section 42 comprising a multi-way valve and a third section 43 where it fluidly connects to the inner chambers 5, 31 and 32. The multi-way valve of the second section has selectable switching states for individually connecting the gas inlet 411 to one of the inflatable (default or spare) inner chambers 5, 31 or 32. The switching states may be selected e.g. by turning the entire valve stem 4.

The wheel assembly of Fig. 1 also comprises a gas outlet for the letting the gas which is inside the wheel assembly but outside the inner chamber being inflated leave the wheel assembly to the atmosphere, preferably the gas outlet 441 is arranged also on valve stem 4. In a particularly preferred embodiment, the valve stem 4 further comprises a fourth section 44 formed e.g. as a peripheral duct part with a gas outlet 441 as depicted in Fig. 1 and in particular in Fig. 2. In Fig. 2, the gas outlet 441 is in fluid connection with the perforated rigid chamber 33. In tube tyres, i.e. tyre in which the default chamber is also a tube, this fluid connection is preferably permanent, whereas for tubeless tyres the fluid connection is interruptible, either by a separate opening/closing means or integrated as part of the switching states of the valve. Indeed, in tubeless tyres, the gas outlet must be closed if the tubeless (default) chamber 5 is used to inflate the tyre 2, i.e. in normal operation before any puncture of the tyre occurred. It is only when wanting to re-inflate a punctured tubeless tyre, that the gas outlet 441 is opened, preferably concomitantly with the switching (e.g. by turning) of the valve 4 to a spare inner chamber 31 or 32.

In Fig. 1, the perforated rigid chamber 33 is further connected to a perpendicular side branching at a position diametrically opposed to the location of the valve stem. In the embodiment shown the lateral branching 332 forms a ring-like configuration connected perpendicularly to the radial perforated rigid chamber 33.

In the embodiment shown in Fig. 1, in case of a flat tyre, the user will connect a source of compressed gas (not represented) to the first section 41 of the valve stem 4 and switch a position opening a gas passage to either one of the spare inner chambers 31 or 32. In the embodiment of Fig. 1, the switching to one of these positions will automatically open the gas passage from the default chamber 5 to the gas outlet 441.

The selected spare inner chamber 31 or 32 will inflate due to the compressed gas and force the gas inside the tyre and outside the inflating spare chamber out of the tyre 2 through the lateral branching 332 and the perforated rigid chamber 33 through gas outlet 441. As the gas inside the default chamber 5 is drained outside the pneumatic wheel assembly during inflation, a potential later pressure drop due to the existence of air pouches during inflation is thereby efficiently prevented.

In Fig. 2, a detailed cross-sectional schematic view of the valve stem 4 is represented showing a detail of the rim 1 with a perforation for the valve stem 4, which comprises a first 41, a second 42, a third 43 and a fourth 44 section. This figure shows an internal tube arrangement 3 with three independent chambers, of which only the connections to the first expandable chamber 31 and to the third perforated non expandable chamber 33 are represented. The internal tube arrangement 3 comprises a roughly cup-shaped central receiving part for receiving the valve stem 4, said central receiving part having connection channels to each of the internal chambers 31, 32 and 33. Preferably, the central receiving part comprises a circular extension 341 arranged to fit inside the perforation in the rim 1. As shown in Fig. 2, this circular extension 341 preferably comprises an inner raised edge essentially complementary to a constricted part 423 of the second section of valve stem 4 in order to hold the inflation valve 4 in place once inserted in the central receiving part and the circular extension 341 fittingly inserted in the perforation of the rim 1.

It is to be noted that the central receiving part of the internal tube arrangement 3 generally comprises on a side opposite to the circular extension 341 a bottom part 342 (bottom of the cup-shaped receiving part). When the inflation valve is inserted in the central receiving part it may be rotated in order to select one of a plurality of positions, each of these positions allowing for the fluid connection of the inlet 411 with one of the inner chambers 31, 32 or 5 (5 via 33) and depending on the selected position of the one or more of the inner chambers with the outlet 441. Preferably, the bottom part 342 is flexible, such that it bends towards the inflation valve if the tyre is under pressure (inflated) thereby pushing the inflation valve against the circular extension 341 and preventing the inflation valve from rotating when the tyre is inflated. This prevents any unintentional rotation while the tyre 2 is inflated and thus the unintentional deflation due to the rotation of the valve 4 into a position connecting the inflated chamber 31, 32 or 5 to the outlet 441.

Although not represented in Fig. 2, it is clear that the inflation valve 4 also comprises in the first section 41 a valve insert, such as e.g. of the Schrader, Presta or Dunlop or equivalent type.

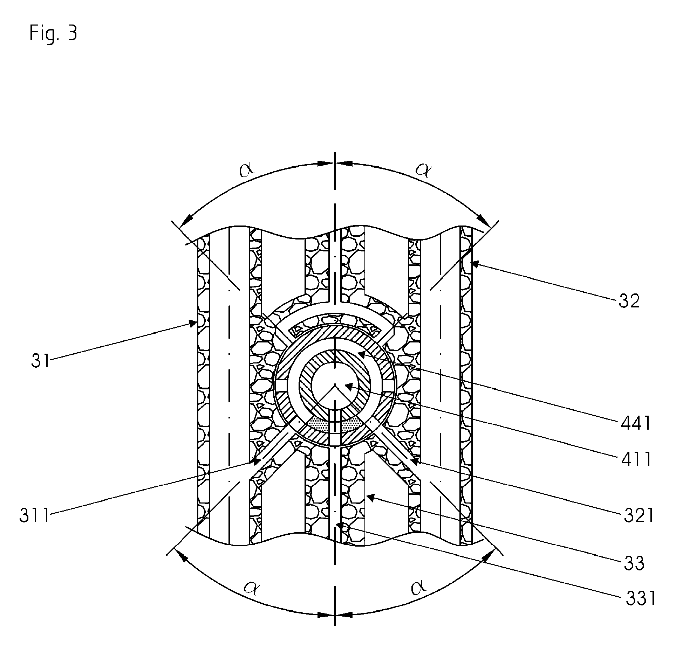

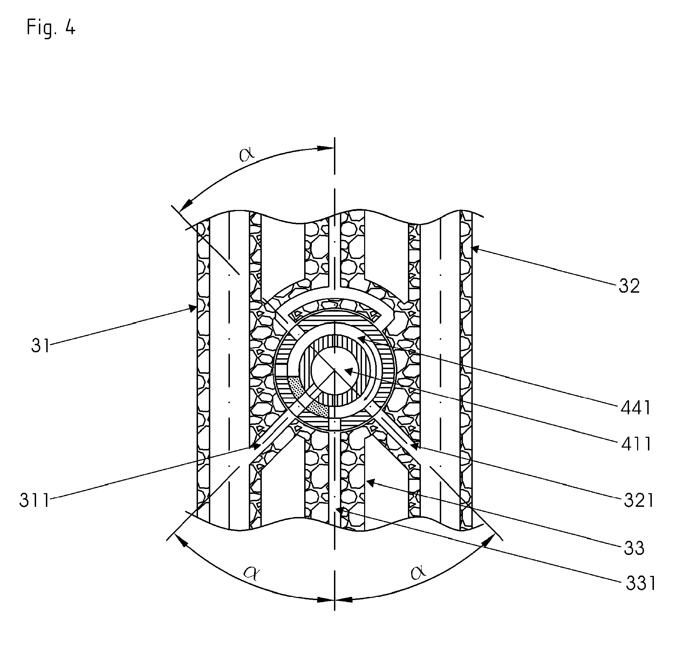

Fig. 3 and Fig. 4 show a top view of a cross-section of a further embodiment of a detail of a pneumatic wheel assembly. The difference between both figures is the rotational position of the inflation valve.

In Fig. 3, the inlet 411 is fluidly connected with the perforated radial part 331 of the non-expandable chamber 33, itself in fluid connection with the interior of the default (tubeless) chamber 5 of the tyre 2, whereas the outlet 441 is in fluid connection with both spare chambers 31 and 32 via supply channels 311 and 321. When the tyre is inflated in this position, the compressed air enters via inlet 411 and passes through the perforated non-expandable chamber 331 into the default chamber 5, i.e. into the "tubeless" space inside the pneumatic wheel assembly. Any gas contained inside spare chambers 31 and 32 is expulsed via channels 311 and 321 through outlet 441 due to the increasing pressure inside the "tubeless" chamber 5.

In Fig. 4, the inflation valve has been rotated clockwise by an angle α (in this case 45°) as compared to its rotational position in Fig. 3. This would be the case for example, if the tubeless tyre has been punctured and the tyre needs to be re-inflated. The user would then turn the inflation valve 4 (which may now rotate freely as the pressure inside the tyre does not push the bottom 342 against the inflation valve 4. The inlet 411 is now fluidly connected with the first expandable chamber 31, whereas the outlet 441 is in fluid connection with spare expandable chamber 32 and the perforated non expandable chamber 33. When the tyre is inflated in this position, the compressed air enters via inlet 411 and passes through the channel 311 into the first expandable chamber 31. The remaining air contained inside the tubeless space 5 and any gas inside spare chamber 32 is expulsed via channels 331 and 321 through outlet 441 due to the increasing pressure inside the expandable chamber 31.

### Legend:

- **1**: rim (wheel)
- **2**: tyre (tubeless type)
- **3**: internal tube arrangement with **three** independent chambers
- **31**: 1st expandable chamber of internal tube
- **311**: supply channel for the first chamber of internal tube
- **32**: 2nd expandable chamber of internal tube
- **321**: supply channel for the second chamber of internal tube
- **33**: 3rd non expandable chamber
- **331**: 3rd non expandable chamber - radial part (perforated channel for discharging air)
- **332**: 3rd non expandable chamber - perpendicular part (perforated channel for discharging air)
- **341**: circular extension
- **342**: bottom part
- **4**: inflation valve
- **41**: first section of the inflation valve
- **411**: valve (air) inlet
- **42**: second section of the inflation valve
- **421**: valve stem part for air supply to tyre and internal tube chambers (twistable for selection)
- **422**: valve stem multi-way valve part, by which:
- in base position - tubeless tyre can be inflated via 411, while
- both internal tube chambers are discharged via 441
- in one of twisted position - one of internal tube chambers can be inflated via 411, while
- tubeless tyre and second internal tube are discharged via 331 / 332 channels to 441 & out to the atmosphere
- **423**: constricted part
- **43**: third section of the inflation valve
- **44**: fourth section of the inflation valve
- **441**: valve (air) outlet, valve stem part, by which tubeless tyre or internal tube chamber air can be discharged
- **5**: default chamber, air space between tubeless tyre interior & internal tube chambers exterior

## Claims

1. A pneumatic wheel assembly comprising a tyre (2), mounted to a wheel rim (1), comprising an inflation valve (4), one default air chamber (5) and one or more spare inner chambers (31, 32), which spare inner chambers (31, 32) are inflatable if necessary, such as in case of puncture of the tyre,
wherein said inflation valve (4) comprises a gas inlet (411) and a multi-way valve having selectable switching states to fluidly connect said inlet to either one of the default chamber (5) or one of the inflatable inner chambers (31, 32) thereby allowing for individual inflation of any of said chambers (5, 31, 32), and a perforated rigid chamber (33) extending circumferentially around the rim between the tyre beads and fluidly connectable to a gas outlet (441).

2. The pneumatic wheel assembly according to claim 1, wherein the perforated rigid chamber (33) is further connected to one or more side branching perforated tube(s) extending from the perforated rigid chamber (33) along at least part of an inner side-wall (22) of the tyre.

3. The pneumatic wheel assembly according to claim 2, wherein the one or more side branching perforated tube(s) (332) extend from the perforated rigid chamber (33) along the inner side-wall (22) and part of the inner side of the tread (21) of the tyre.

4. The pneumatic wheel assembly according to claim 3, wherein the one or more side branching perforated tube(s) (332) extend from the perforated rigid chamber (33) adjacent to the inner wall of the tyre (2).

5. The pneumatic wheel assembly according to any of claims claim 2 to 4, having one side branching perforated tube (332) connected to the perforated rigid chamber (33) at a position diametrically opposed to that of the inflation valve (4).

6. The pneumatic wheel assembly according to any of claims 1 to 5, wherein the tyre is a tubeless tyre and the default air chamber (5) is delimited by an inner wall of the tyre and the base of the wheel rim.

7. The pneumatic wheel assembly according to any of claims 1 to 6, wherein the gas outlet (441) is arranged on the periphery of the inflation valve (4).

8. A vehicle, in particular motorized vehicle, comprising the pneumatic wheel assembly according to any of claims 1 to 7.

9. A method for re-inflating a punctured flat tyre of a pneumatic wheel assembly according to any of claims 1 to 8 of a vehicle, comprising the following steps (b) if necessary, removing an object which caused the puncture of the tyre,
(c) selecting a switching state of the inflation valve (4) corresponding to one of the spare inner chambers (31, 32),
(d) connecting the inlet of the inflation valve (4) to a compressed gas source, and
(e) inflating said selected spare inner chamber with gas from the compressed gas supply.

10. The method according to claim 9 further comprising, before step (b), a step of
(a) lifting the vehicle to get the pneumatic wheel assembly with the punctured tyre from ground.

11. Use of a pneumatic wheel assembly according to any of claims 1 to 8 for allowing re-inflation of a punctured flat tyre without removal of the tyre form the rim.
